(19) **Europäisches Patentamt**

**European Patent Office**

**Office européen des brevets**

(11) **EP 0 990 911 A1**

(12) **EUROPÄISCHE PATENTANMELDUNG**

(43) Veröffentlichungstag:
05.04.2000 Patentblatt 2000/14

(51) Int. Cl.$^7$: **G01P 15/12**, G01P 15/08

(21) Anmeldenummer: 99118269.2

(22) Anmeldetag: 14.09.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.09.1998 DE 19844676**

(71) Anmelder:
**SIEMENS AKTIENGESELLSCHAFT**
**80333 München (DE)**

(72) Erfinder: **Winters, Reiner, Dr.**
**81379 München (DE)**

(54) **Mikromechanischer Sensor auf Basis des Feldeffekts und dessen Verwendung**

(57) Beschrieben ist ein mikromechanischer Sensor zur Messung von Auslenkungen aufweisend mindestens einen MOSFET mit Gate-(G), Drain-(D), Source-(S) und Kanal-(K)-Bereichen, wobei das Gate beweglich angeordnet ist, welcher dadurch gekennzeichnet ist, daß das Gate (G) in eine Richtung (P) parallel zur Substratoberfläche (9) beweglich ist und die Bewegung des Gates in diese Richtung zu einer Vergrößerung oder Verkleinerung des vom Gate überlappten Kanalbereichs in mindestens einem MOSFET führt.

Ferner betrifft die Erfindung die Verwendung des vorstehend genannten mikromechanischen Sensors in Mikrofonen, Drucksensoren, Beschleunigungssensoren oder Kraftsensoren.

FIG 1

EP 0 990 911 A1

**Beschreibung**

Die Erfindung betrifft einem mikromechanischen Sensor zur Messung von Auslenkungen aufweisend mindestens einen MOSFET mit Gate-, Drain-, Source- und Kanal-Bereichen, wobei das Gate beweglich angeordnet ist, sowie dessen Verwendung in Mikrofonen, Drucksensoren, Beschleunigungssensoren oder Kraftsensoren.

Mikromechanische Sensoren für Mikrofone weisen eine aus einem Halbleitermaterial bestehende Membran auf, die einseitig einen Hohlraum begrenzt. Trifft auf die Membran beispielsweise eine Schallwelle auf, so wird diese zu Schwingungen angeregt. Ein für die Auslenkung der Membran charakteristisches Signal mittels Piezoeffekt oder Kapazitätsmessung zwischen Membran und Substrat gewonnen werden. Eine verbesserte Empfindlichkeit gegenüber den vorstehend genannten Methoden läßt sich durch eine kapazitiv hervorgerufene Veränderung des Drain/Source-Stroms in einem MOSFET erzielen. Eine Anordnung, bei der der Drain-/Source-Strom eines MOSFETs über ein vertikal zur Substratoberfläche bewegliches Gate verändert wird, ist aus dem Artikel "Silicon Condenser Microphone with Integrated Field-effect Transistor", W. Kühnel, Sensors and Actuators A.25-27 (1991), 521 - 525, bekannt. Die beschriebene Methode zur Detektion der Auslenkung wurde für die Anwendung in Mikrofonen vorgesehen. Das angegebene FET-Mikrofon umfaßt eine mit einem umlaufenden Wall abgestützte Membranfläche aus Siliziumoxid, $Si_3N_4$ und Aluminium, welche auf einem p-dotierten Siliziumsubstrat angeordnet ist. Unterhalb der Membran, im Bereich des Hohlraums, befindet sich der Source- und Drain-Bereich des MOSFETs. Zwischen den Source- und Drain-Bereichen verläuft der Kanal des FETs. Auf dem Kanal ist eine Siliziumdioxidschicht aufgebracht. Während der Schwingung der Membran, welche das Gate des MOSFETs bildet, verändert sich der Abstand des Gates zum Kanal. Hierdurch ergibt sich über den Feldeffekt eine Änderung des Stroms zwischen Source und Drain.

Die angegebene Sensoranordnung ist lediglich für vertikal zur Substratoberfläche orientierte Bewegungen des Gates vorgesehen. Parallel zur Substratoberfläche orientierte Bewegungen bzw. Auslenkungen lassen sich mit der beschriebenen Anordnung nicht messen.

Eine mikromechanische Sensoranordnung, die eine Messung von lateralen Auslenkungen vorsieht, ist in Bernhard E. Boser und Roger T. Howe, "Surface Micromachined Accelerometers", IEEE Journal of Solid-State Circuits, Vol. 31, No. 3, März 1996, beschrieben. Die Sensoranordnung, welche unter Verwendung von in der Halbleiterfertigung üblichen Produktionsschritten auf einem Siliziumsubstrat hergestellt ist, wird zur Messung von Beschleunigungen eingesetzt. Das hierfür benötigte bewegliche Element besteht aus einem einseitig befestigten Auslegerarm mit einer Sensormasse, welche auf dem gegenüberliegenden Ende des Auslegers befestigt ist. Bei Beschleunigungen wird der Ausleger um einen bestimmten Längenbetrag ausgelenkt. Es werden eine Ausführungsform mit parallel zur Substratoberfläche beweglichem Ausleger und mit senkrecht zur Substratoberfläche beweglichem Ausleger angegeben. Die quantitative Bestimmung des Betrags der Auslenkung wird jeweils kapazitiv vorgenommen. Hierzu besteht der Ausleger im Falle der horizontal beweglichen Ausführungsform in Teilbereichen aus einer kammartigen Fingerstruktur, die in unbeweglich angeordnete Finger zahnartig eingreift. Die Bewegungen des Auslegers führen zu einer Abstandsänderung zwischen den Fingern des Auslegers und den unbeweglich angeordneten Fingern. Zur Auflösungsverbesserung sind eine Vielzahl von Fingerpaaren parallel geschaltet. Die Änderung des Abstands der Auslegerfinger zu den fest verbundenen Fingern bewirkt somit eine meßbare Kapazitätsveränderung bei einer Auslenkung des Auslegers. Bei der Ausführungsform mit vertikaler Beweglichkeit des Auslegers wird die Postition mittels einer flächenförmigen Platte, die gemeinsam mit einer auf der Substratoberfläche fest verankerten Platte eine Kondensatorstruktur bildet, ermittelt.

Nachteil dieser Anordnung ist der relativ große Platzbedarf der komplizierten Form des Auslegers und eine im Verhältnis zur benötigten Chipfläche immer noch zu geringe Empfindlichkeit gegenüber kleinen Auslenkungen. Hauptursache für die geringe Empfindlichkeit ist die relativ große Signal-Dämpfung durch parasitäre Kapazitäten in der mikromechanischen Struktur.

Aufgabe der vorliegenden Erfindung ist die Bereitstellung eines mikromechanischen Sensors auf einem Halbleitersubstrat, der für horizontal zur Substratoberfläche orientierte Auslenkungen im Vergleich zu bekannten Sensoren dieser Art verbesserte Eigenschaften aufweist.

Diese Aufgabe wird erfindungsgemäß gelöst durch einen mikromechanischen Sensor zur Messung von Auslenkungen aufweisend mindestens einen MOSFET mit Gate- G, Drain D, Source- S und Kanal- K-Bereichen, wobei das Gate beweglich angeordnet ist, welcher dadurch gekennzeichnet ist, daß das Gate in eine Richtung P parallel zur Substratoberfläche 9 beweglich ist und die Bewegung des Gates in diese Richtung zu einer Vergrößerung oder Verkleinerung des vom Gate überlappten Kanalbereichs in mindestens einem MOSFET führt.

Die Anzahl der enthaltenen Gates kann größer als eins sein, wenn es zweckmäßig ist. Bevorzugt weist der mikromechanische Sensor gemäß der vorliegenden Erfindung ein oder mehrere MOSFEST's mit genau einem gemeinsamen Gate auf.

Der erfindungsgemäße Sensor umfaßt vorzugsweise eine Anordnung von Source-, Kanal- und Drain-Bereichen auf einem Halbleiter-Substrat 5. Vorzugsweise ist das Gate G beabstandet oberhalb der Substratoberfläche angeordnet. Durch die Bewegung des Gates in Richtung parallel zur Substratoberfläche ergibt sich eine Änderung der Weite w des MOSFETs.

Unter dem Begriff "Auslenkung" wird erfindungsgemäß verstanden, daß ganz allgemein mechanische Bewegungen, die zu Ortsänderungen des Gates führen können, von dem Begriff umfaßt werden. Die Auslenkungen können räumliche Schwingungen, Rotationen oder gewöhnliche lineare Ortsbewegungen sein. Das Gate kann beispielsweise einseitig befestigt sein und bei Beschleunigungen eine Bewegung ausführen. Beispiele sind Ausleger mit und ohne Aktuatoren, Zungen, Federn usw. Es ist aber auch möglich, das das Gate Teil eines mechanischen Teils ist, welches von anderen mechanischen Teilen bewegt wird. Beispiele für entsprechende Anordnungen sind Stößel, Zahnräder, Kolben oder dergleichen.

Ein MOSFET im Sinne der Erfindung ist allgemein ein elektronisches Bauelement mit einer beliebigen Anzahl von Gates und Elektroden, wobei der Strom zwischen mindestens zwei Elektroden über den durch den von mindestens einem Gate ausgehendem Feldeffekt beeinflußt wird.

Der mikromechanische Sensor gemäß der vorliegenden Erfindung eignet sich besonders vorteilhaft zur Messung von Auslenkungen mit geringer Amplitude. Besonders vorteilhaft läßt sich der erfindungsgemäße Sensor in Beschleunigungssensoren einsetzen. Gegenüber Beschleunigungssensoren, die kapazitiv arbeiten, läßt sich auf einer geringeren Chipfläche eine größere Empfindlichkeit erzielen. Hinsichtlich der Konstruktion der mechanisch beweglichen Teile weist der erfindungsgemäße mikromechanische Sensor eine kompaktere, einfacher strukturierte Geometrie auf. Hierdurch ergeben sich Vorteile in der Robustheit und bei der Fertigung des Sensors.

Das bewegliche Gate des erfindungsgemäßen Sensors kann vorteilhafterweise leicht an die spezifischen Anforderungen, je nach gewünschtem Einsatzzweck, angepaßt werden. Im erfindungsgemäßen Sensor wird im Gegensatz zu bekannten Sensoren dieser Art ein Stromsignal anstelle eines Ladungssignals zur Detektion der Auslenkung herangezogen. Hierdurch wird eine ggf. vorhandene Auswerteschaltung vereinfacht. Darüber hinaus ermöglicht die vergleichsweise geringe Dämpfung des Signals die Realisierung von sogenannten "Stand-alone"-Sensoren, also Sensoren mit einer extern angeordneten Elektronik. Aufgrund der ausschließlichen Verwendung von zu üblichen Halbleiterherstellungsprozessen kompatiblen Verfahrensschritten lassen sich jedoch auch erfindungsgemäße mikromechanische Sensoren mit integrierter Auswerteelektronik einfach realisieren. Auch ist eine Kombination mit andersartigen an sich bekannten mikromechanischen Sensoren und Methoden, wie z. B. Aktuatoren oder elektrostatische Dämpfung, für bestimmte Anwendungen zweckmäßig.

Ein weiterer Vorteil des erfindungsgemäßen mikromechanischen Sensors besteht darin, daß ohne Hinzuziehung weiterer Herstellungsschritte vertikale Auslenkungen bzw. Beschleunigungen mit dem erfindungsgemäßen mikromechanischen Sensor detektiert werden können.

Der erfindungsgemäße mikromechanische Sensor ermöglicht die Messung von Auslenkungen über Bestimmung der Position des Gates. Erfindungsgemäß ist das Gate in Richtung parallel zur Substratoberfläche beweglich. Dabei kann das Gate von der mechanischen Eingangsgröße direkt betätigt bzw. bewegt werden, z. B. durch Befestigung eines mechanischen Aktuators an einer Gatezunge. Das Gate kann jedoch auch über weitere mechanisch bewegliche Teile mit der mechanischen Eingangsgröße verbunden sein. Der mikromechanische Sensor gemäß der Erfindung basiert auf dem Effekt einer Änderung des Drain-/Source-Sättigungsstroms, welcher einerseits abhängig ist vom Überlapp w des Gates über den Kanal, andererseits zusätzlich vom Abstand des Gates vom Kanal. Wird daher das bewegliche Gate in der Weise konstruiert, daß es neben einer lateralen Beweglichkeit auch eine vertikale Beweglichkeit in Bezug auf die Substratebene besitzt, so ist mit dem gleichen MOSFET eine Messung beider Bewegungsrichtungen möglich.

In einer weiteren Ausführungsform der Erfindung ist der mikromechanische Sensor daher auch für vertikale Beschleunigungen oder Auslenkungen einsetzbar.

Eine Unterscheidung der lateralen und vertikalen Bewegungsrichtung kann beispielsweise durch Anordnung von mehreren Drain-/Source-Paaren unterhalb des Gates und Vergleich der elektrischen Signale dieser unterhalb des Gates angeordneten MOSFETs erfolgen. Ein Beispiel für einen mikromechanischen Sensor, welcher vertikale Auslenkungen des Gates detektieren kann, ist in der deutschen Patentanmeldung Nr. 198 03 483.0 beschrieben. Dieser mikromechanische Abstandssensor ist mit einer zusätzlichen Einrichtung für Gatebewegungen, die parallel zur Waferoberfläche orientiert sind, ebenfalls erfindungsgemäß einsetzbar.

Der erfindungsgemäße mikromechanische Sensor ermöglicht eine Messung von besonders kleinen Auslenkungen. Vorzugsweise lassen sich Bewegungen parallel zur Waferoberfläche von weniger als 50 nm, insbesondere weniger als 10 nm, ganz besonders bevorzugt weniger als 1 nm, auflösen.

Die Herstellung des erfindungsgemäßen mikromechanischen Sensors erfolgt vorzugsweise unter ausschließlicher Verwendung von in der Halbleitertechnologie üblichen Verfahrensschritten, insbesondere von solchen Verfahrensschritten, wie sie bei der Fertigung von CMOS, BiCMOS oder Bipolarschaltungen üblich sind.

Der Abstand des Gates von der Substratoberfläche bzw. von der Gateoxidschicht beträgt vorzugsweise etwa 20 bis 200 nm, insbesondere 50 bis 150 nm. Als Dielektrikum wird vorzugsweise Vakuum eingesetzt.

Die Dicke des Gateoxids beträgt vorzugsweise 5 bis 30 nm, insbesondere 10 bis 20 nm. Die Länge des Kanals liegt vorzugsweise in einem Bereich von 0,1 bis 5 µm, insbesondere 0,3 bis 1 µm.

Die Erfindung betrifft auch die Verwendung des vorstehend beschriebenen mikromechanischen Sensors in Mikrofonen, Drucksensoren, Beschleunigungssensoren oder Kraftsensoren.

Weitere bevorzugte Ausführungsformen ergeben sich aus den Unteransprüchen.

Die Erfindung wird nachfolgend anhand von Ausführungsbeispielen, welche in den Figuren 1 bis 4 dargestellt sind, näher erläutert.

Es zeigen

Figur 1        einen erfindungsgemäßen mikromechanischen Sensor in Aufsicht, welcher aus einem MOSFET und einem oberhalb des Substrats angeordneten beweglichen Gate besteht,

Figur 2        den mikromechanischen Sensor von Figur 1 im Querschnitt,

Figuren 3a bis 3d        in schematischer Darstellung weitere Ausführungsformen für erfindungsgemäße mikromechanische Sensoren mit mehreren unterhalb des Gates angeordneten MOSFET-Elementen und

Figur 4        einen erfindungsgemäßen mikromechanischen Sensor mit einem Offset.

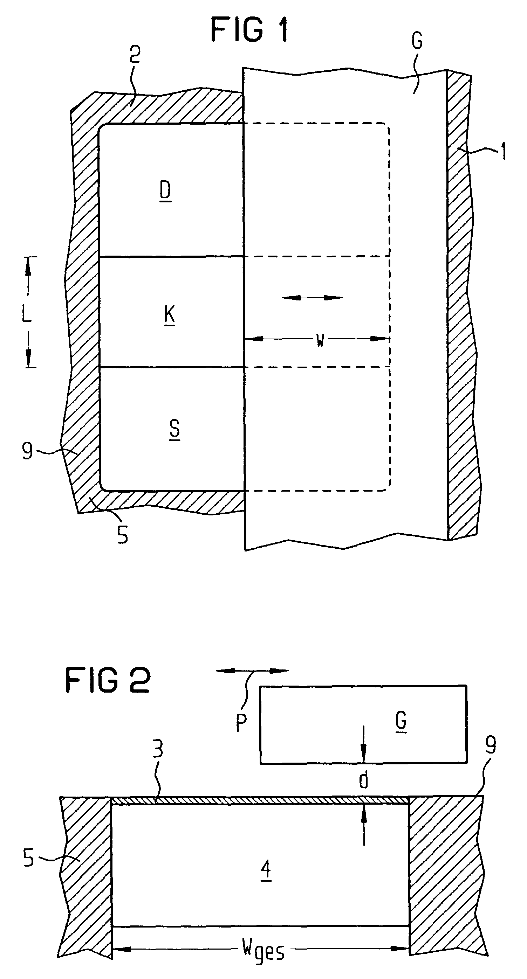

Der in den Figuren 1 und 2 dargestellte mikromechanische Sensor weist ein Gate G in Form eines parallel zur Substratoberfläche 9 beweglichen Balkens auf. Das Gate überlappt den Drain D, Kanal- K und Source-Bereich S eines MOSFET-Transistors nur teilweise. Das Substrat 5 besteht aus n- oder p-dotiertem Monosilizium. Drain- und Source-Bereich sind zwei $p^+$- oder $n^+$-dotierte wannenartige Substratbereiche. Zwischen Drain und Source befindet sich eine Wanne 4. Die Dotierungsbereiche sind von einem beispielsweise durch LOCOS oder Trench hergestellten Isolationsgebiet 2 umschlossen. Auf der Oberfläche der Wanne 4 befindet sich vorzugsweise eine Gateoxidschicht 3. Der Abstand zwischen Gateoxid 3 und Gate G beträgt 100 nm.

Im Querschnitt in Figur 2 ist die horizontal zur Substratoberfläche 9 erfolgende Bewegung des Gates G mit P bezeichnet. Der Abstand d zwischen Gateoxidschicht 3 und Gate liegt bei 100 nm. Die Länge des Kanals ist mit $W_{ges}$ bezeichnet. Die Wanne 4 befindet sich zwischen Drain- und Source-Bereich. Auf der Wanne ist in einer bevorzugten Ausführungsform eine Gateoxidschicht 3 aufgebracht. Das Gate ist vorzugsweise an der dem Substrat zugewandten Seite mit einer dünnen, isolierenden Schutzschicht überzogen. Der erfindungsgemäße Sensor ist somit bezüglich des Drain-, Source- und Kanal-Bereichs im wesentlichen wie ein an sich bekannter MOSFET aufgebaut. Zur Steuerung des zwischen Source und Drain fließenden Stroms wird der Feldeffekt ausgenutzt. Bei einer Änderung der Lage des Gates wird eine Änderung der Leitfähigkeit des Kanal-Substrat-Bereichs hervorgerufen. Eine laterale Bewegung des Gates in Richtung P ändert die elektrische Kanalweite w und beeinflußt somit die Kennlinie des MOSFET. Die Gateelektrode kann auf beliebige Weise mechanisch befestigt sein. Beispielsweise kann das Gate die Form eines einseitig befestigten Auslegearms haben. Für bestimmte Anwendungen kann das Einbringen einer Füllmasse aus einem deformierbaren Material zwischen Substrat und Feldelektrode zweckmäßig sein. Besonders zweckmäßig ist es, wenn sich zwischen Substrat und Gate ein Dielektrikum mit $\varepsilon_r > 1$ befindet.

Im folgenden wird die Arbeitsweise des in den Figuren 1 und 2 dargestellten erfindungsgemäßen mikromechanischen Sensors näher erläutert. Legt man zwischen Gate und Source eine hinreichend große Spannung an, so wird der Transistor aufgesteuert, wobei ein Sättigungsstrom $I_S$, welcher vom Überlapp w des Gates über den Kanal abhängig ist, fließt.

Der sich einstellende Sättigungsstrom zwischen Drain und Source folgt der Beziehung

$$I_S = \mu C'W/L \, (U_{GS} - U_T)^2$$

mit

$\mu$        = Beweglichkeit der Ladungsträger,
C'        = Kopplungskapazität pro Fläche,
W        = (effektive) Kanalweite,
L        = Kanallänge,
$U_{GS}$        = Gatespannung und
$U_T$        = Einsatzspannung.

Wird ein herkömmlicher NMOS-Transistor mit W = 1 µm, L = 0,7 µm und einer Gateoxiddicke von 15 nm hergestellt, so fließt bei einer Spannung von $U_{GS} - U_T$ = 4,3 Volt ein Sättigungsstrom von $I_s$ = 300 µA. Übertragen auf einen Sensor mit einem Gateüberlapp von w = 0,2 µm, einer Kanallänge L = 0,7 µm und einem Gateabstand von d = 100 nm (Abstand zwischen Gate und Kanal) mit Vakuum als dielektrikum ergibt sich aus der Gleichung ein Sourcestrom von $I_S$ = 2,3 µA. Eine laterale Auslenkung des Gates um 1 nm führt somit zu einer mit an sich bekannten Schaltungen meßbaren Stromänderung von 12 nA.

Aus den vorangegangenen Ausführungen wird deutlich, daß bereits ein geringer Auslenkungsbetrag zu einer technisch handhabbaren der Auslenkung proportionalen Stromänderung führt.

In Figur 3a ist eine Ausführungsform für einen erfindungsgemäßen mikromechanischen Sensor dargestellt, welcher aus mehr als einem Drain-, Source- und Kanal-Bereich besteht. Das Gate G steuert in dieser Ausführungsform zwei Transistoren T3 und T4 an. Der Kanalbereich von Transistor T4 wird während der gesamten Gateauslenkung voll von der Gatefläche überdeckt. Der zweite Transistor T3 wird durch Änderung des Kanalüberlapps zu einer Stromänderung veranlaßt. Die Anordnung ist besonders vorteilhaft um thermische Einflüsse und/oder um vertikale Abstandsänderungen zu kompensieren.

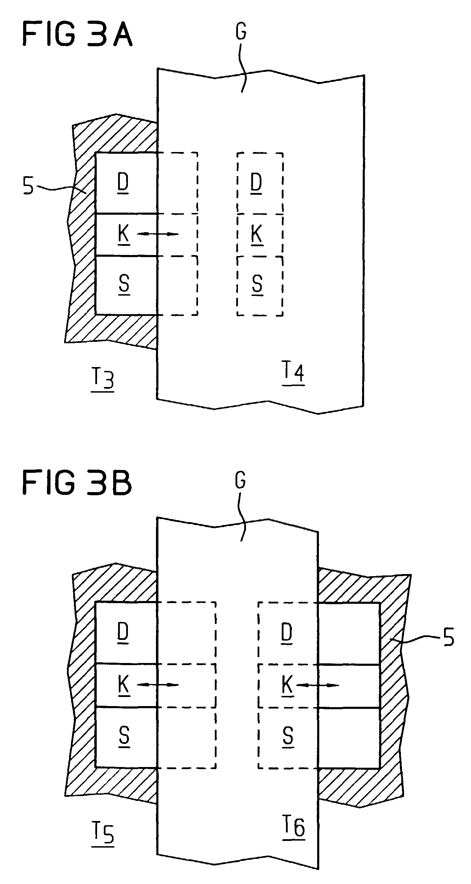

Figur 3b zeigt ein Ausführungsbeispiel mit zwei Transistorbereichen T5 und T6, wobei sich bei einem Transistor bei einer Gatebewegung der überlappte Kanalbereich vergrößert und beim zweiten Transistor verkleinert. Eine derartige Anordnung ist besonders für Brückenschaltungen geeignet.

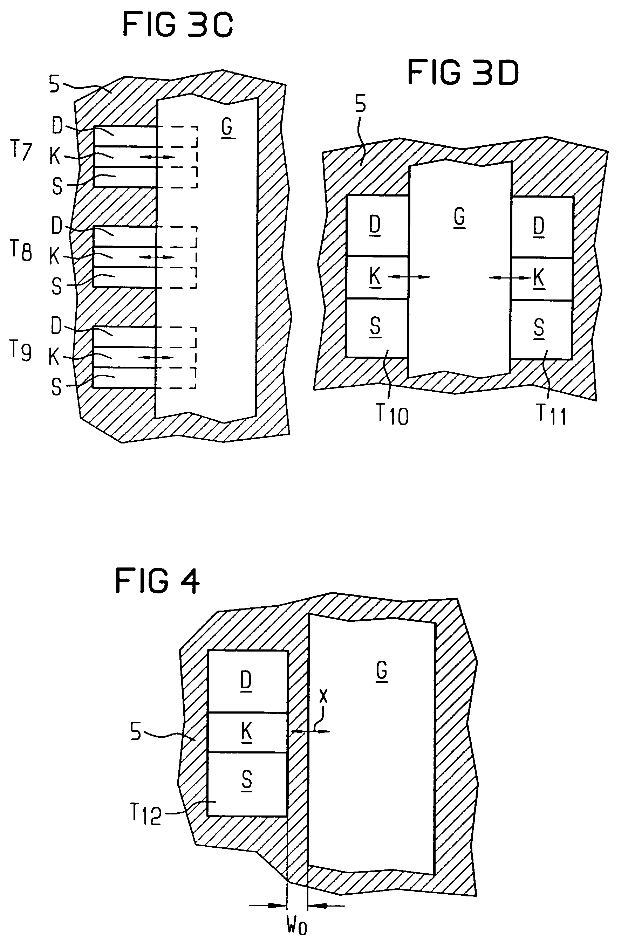

Die Anordnung in Figur 3c zeigt ein Beispiel für einen mikromechanischen Sensor mit mehr als 2 Transistoren T7, T8 und T9 mit gemeinsamem Gate G. Mit einer dem dargestellten Prinzip folgenden Anordnung läßt sich das Ausgangssignal des Sensors und damit seine Empfindlichkeit vergrößern.

Die Anordnung in Figur 3d zeigt einen mikromechanischen Sensor, mit dessen Hilfe elektrisch getrennt eine Erkennung der Bewegungsrichtung möglich ist. Bei einer Auslenkung des Gates G nach links wird Transistor T10 angesteuert, bei einer Auslenkung nach rechts Transistor T11.

Das in Figur 4 dargestellte Ausführungsbeispiel zeigt einen Sensor, welcher bei geringen Auslenkungen $x < W_0$ noch kein Ausgangssignal liefert. Erst wenn ein geometrisch vorgegebener Schwellenwert $W_0$ überschritten wird, so überlappt das Gate den Kanalbereich und der Transistor T12 wird angesteuert.

Die Erfindung umfaßt auch Ausführungsformen, welche eine Kombination der vorangegangenen Beispiele darstellen. So umfaßt die Erfindung beispielsweise auch einen mikromechanischen Sensor, der sowohl parallel zur Substratoberfläche liegende Auslenkungen als auch vertikal zu dieser Richtung liegende Auslenkungen des Gates mißt. Eine Unterscheidung von lateraler und vertikaler Bewegungsrichtung des Gates ist beispielsweise mit einer Anordnung gemäß Figur 3a möglich. Transistor T4 reagiert nur auf vertikale Abstandsänderungen, Transistor T3 auf beide Abstandsänderungen. Durch Vergleich der Stromsignale kann eine Unterscheidung z. B. mit Hilfe einer Auswerteelektronik durchgeführt werden.

**Patentansprüche**

1. Mikromechanischer Sensor zur Messung von Auslenkungen aufweisend mindestens einen MOSFET mit Gate-(G), Drain-(D), Source-(S) und Kanal-(K)- Bereichen, wobei das Gate beweglich angeordnet ist,

   **dadurch gekennzeichnet**,
   daß das Gate (G) in eine Richtung (P) parallel zur Substratoberfläche (9) beweglich ist und die Bewegung des Gates in diese Richtung zu einer Vergrößerung oder Verkleinerung des vom Gate überlappten Kanalbereichs in mindestens einem MOSFET führt.

2. Mikromechanischer Sensor nach Anspruch 1,
   **dadurch gekennzeichnet**,
   daß das Gate parallel zur Substratoberfläche und senkrecht zur Substratoberfläche bewegbar ist.

3. Mikromechanischer Sensor nach Anspruch 1 oder 2,
   **dadurch gekennzeichnet**,
   daß sich zwischen Drain- und Source-Bereichen eine Wanne (4) und eine zwischen Wanne und Gate angeordnete Gateoxidschicht (3) befinden.

4. Mikromechanischer Sensor nach mindestens einem der Ansprüche 1 bis 3,
   **dadurch gekennzeichnet**,
   daß der Abstand zwischen Gate und Substratoberfläche bzw. Gateoxidschicht im Bereich von 20 nm und 200 nm liegt.

5. Mikromechanischer Sensor nach mindestens einem der Ansprüche 1 bis 4,
   **dadurch gekennzeichnet**,
   daß der mikromechanische Sensor zwei oder mehrere MOSFETs (T1, T2) enthält, wobei mindestens zwei MOSFETs ein gemeinsames Gate besitzen.

6. Mikromechanischer Sensor nach Anspruch 5,
   **dadurch gekennzeichnet**,
   daß die Bewegung eines Gates parallel zur Substratoberfläche zu einer Änderung des vom Gate überlappten Kanalbereich in mindestens einem MOSFET (T3) führt und sich bei Bewegung dieses Gates der vom Gate überlappte Kanalbereich in mindestens einem weiteren von diesem Gate überdeckten MOSFET (T4) nicht ändert.

7. Mikromechanischer Sensor nach Anspruch 5,
   **dadurch gekennzeichnet**,
   daß die Bewegung eines Gates parallel zur Substratoberfläche gleichzeitig zu einer Vergrößerung des vom Gate überlappten Kanalbereichs in mindestens eines MOSFETs (T5) und zu einer Verkleinerung des vom Gate überlappten Kanalbereichs in mindestens einem weiteren von diesen Gate ebenfalls überdeckten MOSFET (T6) führt.

8. Mikromechanischer Sensor nach Anspruch 5,
   **dadurch gekennzeichnet**,
   daß die Bewegung eines Gates parallel zur Substratoberfläche gleichzeitig entweder zu einer Vergrößerung oder Verkleinerung des vom Gate überlappten Kanalbereichs in mindestens zwei MOSFETs (T7, T8, T9) führt, wobei diese MOSFETs vom gleichen Gate überdeckt werden.

9.  Mikromechanischer Sensor nach Anspruch 5,
    **dadurch gekennzeichnet**,
    daß ein Gate

    -   in einer ersten Position keinen Kanal-Bereich einer Gruppe aus zwei MQSFETs (T10, T11) überlappt (w=0) und
    -   bei Bewegung dieses Gates parallel zur Substratoberfläche in eine zweite Position in dieser zweiten Position das Gate einen Kanalbereich des ersten MOSFETs (T10) der besagten Gruppe überlappt und keinen Kanalbereich des zweiten MOSFETs (T11) dieser Gruppe überlappt und
    -   bei Bewegung dieses Gates in bezüglich der zweiten Position entgegengesetzte Richtung aus der ersten Position in eine dritte Position das Gate einen Kanalbereich des zweiten MOSFETs (T10) der Gruppe überlappt und keinen Kanalbereich des ersten MOSFETs (T10) dieser Gruppe überlappt.

10. Mikromechanischer Sensor nach Anspruch 5,
    **dadurch gekennzeichnet**,
    daß ein Gate

    -   in einer ersten Position keinen Kanal-Bereich eines MOSFETs (T12) überlappt,
    -   bei Bewegung dieses Gates in eine Richtung parallel zur Substratoberfläche um die Auslenkung (x) in eine zweite Position ab einer Auslenkung $x > w_0$, wobei $w_0 > 0$ ist, dieses Gate einen Kanalbereich des genannten MOSFETs (T12) überlappt und wobei mit anwachsender Auslenkung (x) die Fläche des überlappten Kanalbereichs anwächst.

11. Mikromechanischer Sensor nach mindestens einem der Ansprüche 1 bis 10,
    **dadurch gekennzeichnet**,
    daß der mikromechanische Sensor aus Komponenten aufgebaut ist, die kompatibel zu an sich bekannten CMOS, BiCMOS oder Bipolar-Prozessen sind.

12. Mikromechanischer Sensor nach mindestens einem der Ansprüche 1 bis 11,
    **dadurch gekennzeichnet**,
    daß auf dem Chip des mikromechanischen Sensors eine Auswerte- und/oder Ansteuerschaltung für den Sensor vorhanden ist.

13. Verwendung des mikromechanischen Sensors nach Anspruch 1 in Mikrofonen, Drucksensoren, Beschleunigungssensoren oder Kraftsensoren.

## FIG 1

## FIG 2

## FIG 3A

## FIG 3B

## FIG 3C

## FIG 3D

## FIG 4

**Europäisches Patentamt**

## EUROPÄISCHER RECHERCHENBERICHT

Nummer der Anmeldung

EP 99 11 8269

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 785 437 A (MOTOROLA INC) 23. Juli 1997 (1997-07-23) * Spalte 1, Zeile 51 - Spalte 3, Zeile 31; Abbildung 1 * | 1,5,7, 11-13 | G01P15/12 G01P15/08 |
| Y | * Spalte 8, Zeile 38 - Zeile 42 * | 4 | |
| X | DE 195 42 799 A (NIPPON DENSO CO) 23. Mai 1996 (1996-05-23) | 1,2,5-7 | |
| A | * Spalte 4, Zeile 35 - Spalte 7, Zeile 30; Abbildung 1 * | | |
| X | WO 98 21756 A (BROCKHERDE WERNER ;ASLAM AMER (DE); SCHANZ MICHAEL (DE); FRAUNHOFE) 22. Mai 1998 (1998-05-22) * Seite 4, Zeile 23 - Seite 5, Zeile 10; Abbildung 1 * | 1,3,5 | |
| Y | EP 0 194 953 A (METRAVIB SA) 17. September 1986 (1986-09-17) * Anspruch 1 * | 4 | |
| | | | **RECHERCHIERTE SACHGEBIETE (Int.Cl.7)** |
| X | DE 195 09 160 A (NIPPON DENSO CO) 21. September 1995 (1995-09-21) | 1,2,5,7 | G01P |
| A | * das ganze Dokument * | 8-10 | |

Der vorliegende Recherchenbericht wurde für alle Patentansprüche erstellt

| Recherchenort | Abschlußdatum der Recherche | Prüfer |
|---|---|---|
| DEN HAAG | 20. Dezember 1999 | Nessmann, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                
& : Mitglied der gleichen Patentfamilie, übereinstimmendes Dokument

EPO FORM 1503 03.82 (P04C03)

**EP 0 990 911 A1**

**ANHANG ZUM EUROPÄISCHEN RECHERCHENBERICHT
ÜBER DIE EUROPÄISCHE PATENTANMELDUNG NR.**     EP 99 11 8269

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-12-1999

| Im Recherchenbericht angeführtes Patentdokument | Datum der Veröffentlichung | Mitglied(er) der Patentfamilie | | Datum der Veröffentlichung |
|---|---|---|---|---|
| EP 0785437 A | 23-07-1997 | US | 5818093 A | 06-10-1998 |
| | | JP | 9321318 A | 12-12-1997 |
| DE 19542799 A | 23-05-1996 | JP | 8148698 A | 07-06-1996 |
| | | US | 5895851 A | 20-04-1999 |
| WO 9821756 A | 22-05-1998 | EP | 0922304 A | 16-06-1999 |
| EP 0194953 A | 17-09-1986 | FR | 2578323 A | 05-09-1986 |
| DE 19509160 A | 21-09-1995 | JP | 7307478 A | 21-11-1995 |
| | | US | 5627397 A | 06-05-1997 |

EPO FORM P0461